# EUROPÄISCHE PATENTSCHRIFT

(11) **EP 2 331 926 B1**
(45) Veröffentlichungstag und Bekanntmachung des Hinweises auf die Patenterteilung: **10.10.2012**
(21) Anmeldenummer: 09782165.6
(22) Anmeldetag: 25.08.2009
(51) Int. Cl.: G01M 1/12, B60G 17/018

(54) **VERFAHREN UND VORRICHTUNG ZUM ERMITTELN EINES SCHWERPUNKTES EINES KRAFTFAHRZEUGS**
METHOD AND DEVICE FOR DETERMINING A CENTER OF GRAVITY OF A MOTOR VEHICLE
PROCÉDÉ ET DISPOSITIF POUR DÉTERMINER LE CENTRE DE GRAVITÉ D'UN VÉHICULE AUTOMOBILE

(30) Priorität: 29.09.2008 DE 102008042433
(43) Veröffentlichungstag der Anmeldung: 15.06.2011
(73) Patentinhaber: Robert Bosch GmbH, 70442 Stuttgart (DE)
(72) Erfinder: KROEGER, Patrick, 74072 Heilbronn (DE)
(86) Internationale Anmeldenummer: PCT/EP2009/060933
(87) Internationale Veröffentlichungsnummer: WO 2010/034580

(56) Entgegenhaltungen:
- EP-A- 0 523 397
- DE-A1- 19 623 595
- DE-A1-102004 056 108

## Beschreibung

### Stand der Technik

Die Erfindung betrifft ein Verfahren und eine Vorrichtung zum Ermitteln eines Schwerpunktes eines Kraftfahrzeugs.

Kraftfahrzeuge werden regelmäßig mit Sicherheitsfunktionen und/oder fahrdynamischen Regelfunktionen, beispielsweise mit ESP, ausgestattet. Da die Kraftfahrzeuge, insbesondere mit hoher Beladungsvarianz, beispielsweise Nutzfahrzeuge, im beladenen Zustand ein stark unterschiedliches Fahrverhalten zum unbeladenen Zustand aufweisen können, spielt bei vielen Regelfunktionen die Lage des Schwerpunktes des Kraftfahrzeugs, insbesondere im beladenen Zustand, als Eingangsgröße eine wichtige Rolle.

Aus der DE 10 2004 056 108 A1 ist ein Verfahren zur näherungsweisen Ermittlung der Schwerpunktlage eines Fahrzeuges bekannt. Dabei wird aus den Längskräften der Räder, dem Steigungswinkel der Straße, der Längsbeschleunigung des Fahrzeugs und dem Radabstand ein Schätzwert für die Schwerpunktlage des Fahrzeuges in Längsrichtung bestimmt.

Bei diesem und anderen bekannten Verfahren wird grundsätzlich zumindest eine Raumkoordinate des Schwerpunktes als bekannt vorausgesetzt und fest vorgegeben. Je nach Kraftfahrzeug und Beladung des Kraftfahrzeugs kann jedoch der Schwerpunkt bezüglich der Fahrzeugmitte in alle drei Raumrichtungen stark verschoben sein. Dies gilt Insbesondere für Kleintransporter und/oder Fahrzeuge mit Beladung auf einem Dachgepäckträger.

### Offenbarung der Erfindung

Es ist daher die Aufgabe der vorliegenden Erfindung ein Verfahren und eine Vorrichtung zum Ermitteln eines Schwerpunktes eines Kraftfahrzeugs zu schaffen, mit dem bzw. der der Schwerpunkt einfach und genau ermittelt werden kann.

Gelöst wird diese Aufgabe gemäß der Erfindung durch die im Patentanspruch 1 angegebenen Merkmale. Weitere Ausgestaltungen der Erfindung ergeben sich aus den Unteransprüchen.

Ein wesentlicher Aspekt der Erfindung besteht darin, für wenigstens ein Rad des Kraftfahrzeugs jeweils zwei unterschiedliche, eine Antriebskraft repräsentierende Werte (im Folgenden Antriebskraftwerte), sowie zugehörige Längsbeschleunigungswerte und zugehörige Radschlupfwerte zu ermitteln. Aus diesen Zustandsgrößen können alle drei Koordinaten des Masseschwerpunktes einfach und genau berechnet werden. Die Vorgabe einer bestimmten Koordinate ist nicht mehr erforderlich. Unter zugehörigen Werten sollen hier solche verstanden werden, die entweder gleichzeitig oder zeitnah zu den Antriebskraftwerten gemessen werden.

Der Masseschwerpunkt ist vorzugsweise der Gesamtschwerpunkt des Kraftfahrzeugs einschließlich Beladung und ggf. einschließlich einer oder mehrerer Personen.

Als Koordinaten des Schwerpunktes werden vorzugsweise ein Abstand des Schwerpunktes zu einer Hinterachse des Kraftfahrzeugs, eine Höhe des Schwerpunktes und eine seitliche Abweichung des Schwerpunktes von einer Mittellängsachse des Kraftfahrzeugs verwendet.

Die genaue Kenntnis des Schwerpunktes ermöglicht es, Fahrsicherheitssysteme und/oder Fahrregelsysteme an unterschiedliche Beladungsverhältnisse anzupassen und damit die Fahrsicherheit zu verbessern.

Die unterschiedlichen Antriebskraftwerte werden vorzugsweise zu unterschiedlichen Zeitpunkten ermittelt. Die Zeitpunkte liegen vorzugsweise weit, vorzugsweise wenigstens einige s, auseinander. Je unterschiedlicher die Fahrsituationen, desto genauer wird prinzipiell das Ergebnis.

Die unterschiedlichen Antriebskraftwerte können alternativ auch zeitkontinuierlich ermittelt werden.

In einer weiteren vorteilhaften Ausgestaltung werden die Koordinaten des Schwerpunkts mittels eines rekursiven Identifikationsalgorithmus ermittelt. Dies trägt dazu bei, dass die Koordinaten besonders schnell und präzise ermittelt werden. In diesem Zusammenhang ist es besonders vorteilhaft, wenn die Koordinaten mit der Methode der kleinsten Quadrate (RLS), einem Kalman-Filter und/oder einem UKF (Unscented-Kalman-Filter) ermittelt werden. Der Kalman-Filter ermittelt grundsätzlich abhängig von einer Anzahl von Zustandsgrößen, beispielsweise abhängig von den Antriebskraftwerten, den Radschlupfwerten und/oder den Längsbeschleunigungswerten, eine vorzugsweise optimale Parametrisierung einer Funktion. Die optimale Parametrisierung ist beispielsweise durch ein minimales Fehlerquadrat gekennzeichnet. Der UKF wird vorzugsweise bei stark nicht linearen Funktionen verwendet.

Die Koordinaten des Schwerpunkts werden vorzugsweise einem Sicherheits - und/oder Regelalgorithmus des Kraftfahrzeugs als Eingangsgröße zugeführt.

### Kurze Beschreibung der Zeichnungen

Die Erfindung wird nachstehend anhand der beigefügten Zeichnungen beispielhaft näher erläutert. Es zeigen:
- Fig. 1: eine Vorrichtung zum Ermitteln eines Schwerpunktes des Kraftfahrzeugs,
- Fig. 2: eine erste Gleichung zum Ermitteln zweier Koordinaten des Schwerpunktes,
- Fig. 3: ein Gleichungssystem zum Ermitteln der Koordinaten des Schwerpunktes,
- Fig. 4: ein Ablaufdiagramm eines Programms zum Ermitteln der Koordinaten des Schwerpunktes,
- Fig. 5: sechs Diagramme.

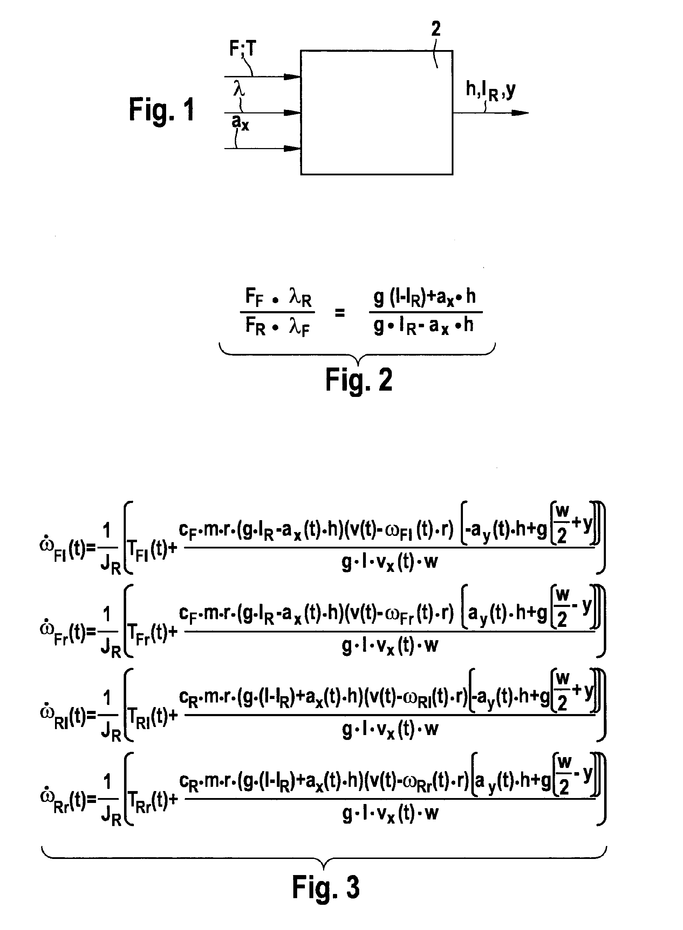

Fig. 1 zeigt eine Vorrichtung 2 (Figur 1) zum Ermitteln eines Schwerpunkts eines Kraftfahrzeugs, wie z. B. ein Steuergerät. Die Vorrichtung 2 umfasst einen rekursiven Identifikationsalgorithmus, beilspielsweise einen RLS, einen Kalman-Filter oder einen UKF. Diese Algorithmen berechnen durch rekursive Identifikation abhängig von mehreren Eingangsgrößen eine oder mehrere Ausgangsgrößen, wobei sich dich Ausgangsgrößen schrittweise an die optimalen Werte annähern. Die Ausgangsgrößen sind dabei vorzugsweise Parameter von Formeln, die rekursiv ermittelt werden.

Als Eingangsgrößen werden der Vorrichtung 2 zumindest Antriebskraftwerte F (vom Motor-Steuergerät), Radschlupfwerte Ä und Längsbeschleunigungswerte aₓ zugeführt (oder für diese Größen repräsentative Werte). Beispielsweise sind Antriebs- oder Bremsmomente T repräsentativ für die Antriebskraftwerte F. Die Antriebskraftwerte F können auch negativ sein, was in diesem Fall einer Bremskraft entspricht.

Als Ausgangsgröße liefert die Vorrichtung 2 alle drei Raumkoordinaten des Schwerpunktes, z. B. einen Abstand I_{R} des Schwerpunktes zu einer Hinterachse des Kraftfahrzeugs eine Höhe h des Schwerpunktes und eine seitliche Abweichung y des Schwerpunktes von einer Mittellängsachse des Kraftfahrzeugs. Wahlweise kann auch ein anderes Bezugskoordinatensystem gewählt werden.

Die Koordinaten h, I_{R}, y des Schwerpunktes werden vorzugsweise einem Sicherheits- und/oder Regelalgorithmus des Kraftfahrzeugs als Eingangsgrößen zugeführt. Die genannten Funktionen (z. B. ESP, ABS, ASR, etc.) können somit an unterschiedliche Beladungszustände adaptiert werden. Bei einem genau bekanntem Abstand I_{R} kann beispielsweise die Funktion eines ABS-Systems verbessert werden, wovon die Fahrsicherheit profitiert.

Eine erste Gleichung (Figur 2) zeigt einen einfachen Zusammenhang zwischen den abhängig von Messwerten ermittelten Antriebskraftwerten F_{F}, F_{R} an einem Rad einer Vorderachse bzw. einer Hinterachse des Kraftfahrzeugs, den dazu gehörigen Radschlupfwerten λ_{F}, λ_{R} und Längsbeschleunigungswerten aₓ des Kraftfahrzeugs und zweier der Koordinaten des Schwerpunktes, insbesondere dem Abstand I_{R} und der Höhe h. Ferner gehen in diese erste Gleichung die Erdbeschleunigung g und ein Abstand I zwischen der Vorder- und Hinterachse des Kraftfahrzeugs ein. Die erste Gleichung hat somit mit dem Abstand I_{R} und der Höhe h zwei Unbekannte. Die erste Gleichung kann mit einmalig ermittelten Eingangsgrößen, insbesondere den Antriebskraftwerten F_{F}, F_{R}, den dazu gehörigen Radschlupfwerten λ_{F}, λ_{R} und Längsbeschleunigungswerten aₓ nicht gelöst werden. Daher wird die Gleichung gelöst, indem die Antriebskraftwerte F_{F}, F_{R} und die zugehörigen Radschlupfwerte λ_{F}, λ_{R} und Längsbeschleunigungswerte aₓ zu wenigstens zwei oder mehr unterschiedlichen Zeitpunkten ermittelt werden. Dadurch entsteht ein lösbares, vorzugsweise überbestimmtes Gleichungssystem, mit dem die gesuchten Koordinaten sehr genau berechnet werden können. Dieses erste Gleichungssystem wird vorzugsweise verwendet, wenn sich der Schwerpunkt in γ-Richtung etwa in der Mitte des Kraftfahrzeugs befindet. Ferner kann eine weitere Gleichung verwendet werden, die die γ-Koordinate und eine weitere Koordinate als Parameter enthält, und mittels derer die seitliche Abweichung y berechnet werden kann.

Gemäß Fig. 3 wird z. B. ein Gleichungssystem aus vier Differenzialgleichungen verwendet, die jeweils die Drehbeschleunigung eines der vier Räder des Kraftfahrzeugs beschreiben. Aus jeder der Differenzialgleichungen könnten jeweils alle drei Koordinaten h, I_{R}, y des Schwerpunktes berechnet werden. Das Ergebnis wird jedoch genauer, wenn wenigstens zwei , vorzugsweise alle Gleichungen z,. B. mittels eines rekursiven Algorithmus gelöst werden.

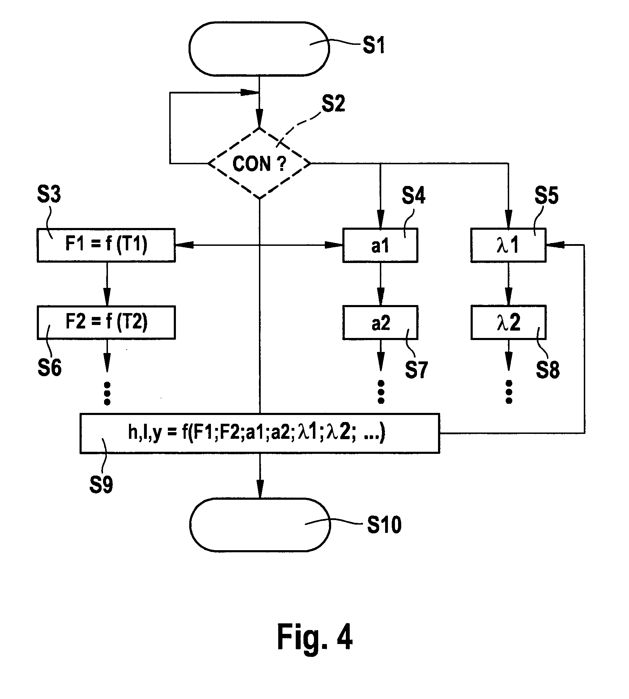

In diesen Gleichungen sind die Antriebs- oder Bremsmomente T, insbesondere die Antriebs- oder Bremsmomente T_{Fl}, T_{Fr}, T_{Rl}, T_{Rr} vorne links bzw. vorne rechts bzw. hinten links bzw. hinten rechts, repräsentativ für die Antriebskraftwerte F. Der Teilbruchterm (v(t)-(w(t) x r))/v(t), der in allen Differenzialgleichungen auftritt, ist repräsentativ für die Radschlupfwerte λ, wobei die Fahrzeuggeschwindigkeit v, die Radwinkelgeschwindigkeit ω, und der Radradius r in den Teilbruchterm eingehen. Dabei beziehen sich die einzelnen Radwinkelgeschwindigkeiten ω_{Fl}, ω_{Fr}, ω_{Rl}, ω_{Rr} wieder auf das Rad vorne links bzw. vorne rechts bzw. hinten links bzw. hinten rechts. Ferner gehen in die Gleichung die Trägheitsmomente J_{F}, J_{R} der Räder vorne und hinten, die Radwinkelbeschleunigungen ώ_{Fl}, ώ_{Fr}, ώ_{Rl}, ώ_{Rr}, die Längssteifigkeit c, die Masse m des Kraftfahrzeugs, der Radradius r, vorzugsweise die Querbeschleunigung ay und die Spurweite w ein. Die Längssteifigkeit c ist die Proportionalitätskonstante zum Beschreiben der Proportionalität zwischen den Antriebskräften und den Radschlupfwerten λ. Vorzugsweise ist ein Programm zum Ermitteln der Koordinaten h, I_{R}, y des Schwerpunkts auf einem Speichermedium der Vorrichtung 2 gespeichert (Figur 4). Das Programm wird in einem Schritt S1 gestartet, beispielsweise zeitnah einem Motorstart einer Brennkraftmaschine des Kraftfahrzeugs, wobei in dem Schritt S1 gegebenenfalls Variablen initialisiert werden.

In einem Schritt S2 kann überprüft werden, ob eine vorgegebene Bedingung CON erfüllt ist. Die vorgegebene Bedingung CON ist vorzugsweise erfüllt, wenn sich das Kraftfahrzeug in einer kontrollierten Fahrsituation befindet, der Radschlupf also z. B. kleiner ist als ein vorgegebener Schwellenwert.

Falls die Bedingung des Schritts S2 erfüllt ist (Fall y), werden die Schritte S3, S4 und S5 vorzugsweise parallel oder zumindest zeitnah durchgeführt. Gegebenenfalls wird der Schritt S2 erneut abgearbeitet, falls die Bedingung des Schritts S2 nicht erfüllt ist.

In Schritt S3 wird ein erster Antriebskraftwert F1 abhängig von einem ersten Raddrehmoment T1 ermittelt. Das erste Raddrehmoment T1 kann beispielsweise mit einem Drehmoment-Sensor gemessen werden.

In dem Schritt S4 wird ein zu dem ersten Antriebskraftwert F1 gehöriger erster Längsbeschleunigungswert a1 beispielsweise mittels eines Beschleunigungssensors ermittelt. Alternativ dazu kann der erste Längsbeschleunigungswert a1 durch zeitliche Ableitung der Geschwindigkeit v bestimmt werden.

In Schritt S5 wird ein zu dem ersten Antriebskraftwert F1 gehöriger erster Radschlupfwert λ1 gemessen bzw. in bekannter Weise geschätzt.

Die Schritte S6, S7 und S8 werden nach den Schritten S3, S4 und S5 in entsprechender Weise abgearbeitet, wobei in den Schritten S6, S7 und S8 der zweite Antriebskraftwert F2 abhängig von einem zweiten Radrehmoment T2, der zugehörige zweite Längsbeschleunigungswert a2 und der zugehörige zweite Radschlupfwert λ2 ermittelt werden.

In Schritt S9 werden die Koordinaten h, I_{R}, y des Schwerpunktes abhängig von den Antriebskraftwerten F1, F2, den Längsbeschleunigungswerten a1, a2 und den Radschlupfwerten λ1, λ2 ermittelt. Dies erfolgt vorzugsweise auf Grundlage einer der Formeln, die in den Figuren 2 und 3 gezeigt sind. Weitere Messungen von Antriebskraft, Längsbeschleunigung und Radschlupf können folgen.

Nach dem Schritt S9 können die Schritte S3 bis S8 erneut abgearbeitet werden. Alternativ dazu kann das Programm mit Schritt S10 beendet werden. Die Koordinaten h, I_{R}, y des Schwerpunktes werden vorzugsweise einem Sicherheits - und/oder Regelalgorithmus des Kraftfahrzeugs als Eingangsgrößen zur Verfügung gestellt.

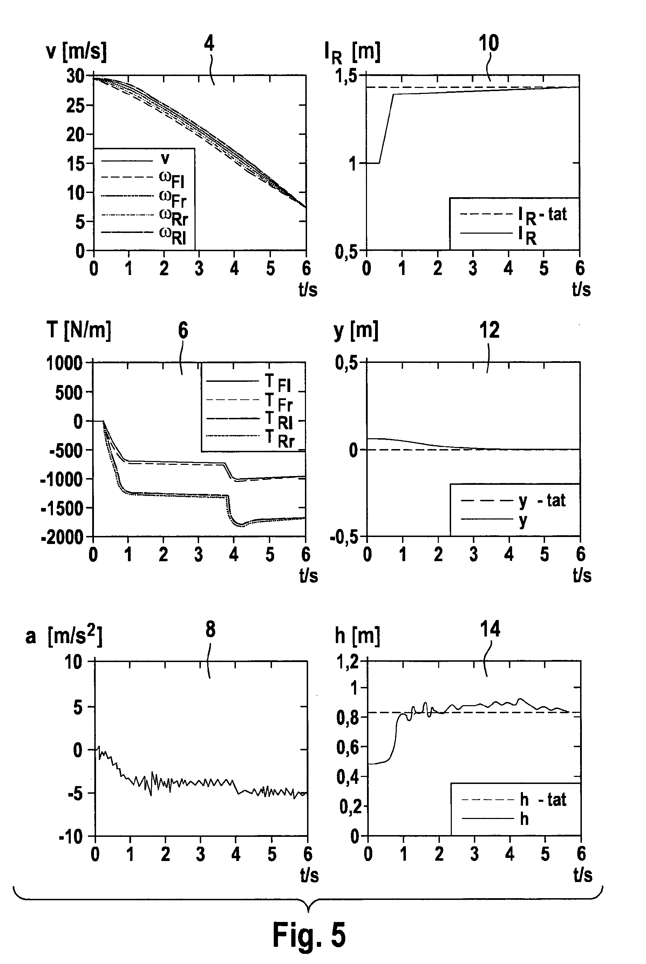

Mit dieser Methode kann der Schwerpunkt innerhalb weniger Sekunden sehr präzise ermittelt werden, wie aus den Diagrammen 4, 6, 8, 10, 12, 14 (Figur 5) erkennbar ist. Insbesondere zeigt ein erstes Diagramm 4 die Geschwindigkeit v des Kraftfahrzeugs und die Radwinkelgeschwindigkeiten ω_{Fl}, ω_{Fr}, ω_{Rl}, ω_{Rr}, in Abhängigkeit von der Zeit t. Da die Geschwindigkeiten v, ω_{Fl} ω_{Fr}, ω_{Rl}, ω_{Rr} kleiner werden, zeigt das erste Diagramm 4 einen Bremsvorgang von nahezu 30 m/s auf 5 m/s. Dabei liegen die einzelnen Werte derart nah bei einander, dass lediglich eine dicke Linie zu erkennen ist. Dies ist repräsentativ dafür, dass die Räder stabil laufen. Dieser stabile Lauf der Räder kann als Startbedingung für einen Algorithmus zum Ermitteln der Koordinaten h, I_{R}, y des Schwerpunktes vorausgesetzt werden, insbesondere als Bedingung CON in dem Programm zum Ermitteln der Koordinaten h, I_{R}, y des Schwerpunkts.

Während des in dem ersten Diagramm 4 gezeigten Bremsvorgangs tritt an den Rädern der Hinterachse ein Radmoment T_{Rl}, T_{Rr} zwischen 0 und -1000 Nm, und an den Rädern der Vorderachse ein Radmoment T_{Fl}, T_{Fr} zwischen 0 und ca. -1800 Nm auf, was in einem zweiten Diagramm 6 dargestellt ist.

Die auftretenden Radmomente T_{Rl}, T_{Rr} T_{Fl}, T_{Fr} bewirken eine Längsbeschleunigung (Verzögerung) aₓ, die in einem dritten Diagramm 8 dargestellt ist und die zwischen 0 und -5 m/s² beträgt.

Die Vorrichtung 2 liefert, wie in einem vierten Diagramm 10 dargestellt ist, in Sekundenschritten den Abstand I_{R} des Schwerpunktes zur Hinterachse, wie in einem fünften Diagramm 12 dargestellt ist, die seitliche Abweichung y des Schwerpunktes und, wie in einem sechsten Diagramm 14 dargestellt ist, die Höhe h des Schwerpunktes, wobei sich die ermittelten Koordinaten h, I_{R}, y stufenweise an die gestrichelt dargestellten tatsächlichen Koordinaten h_tat, I_{R}_tat, y_tat annähern.

## Patentansprüche

1. Verfahren zum Ermitteln des Schwerpunktes eines Kraftfahrzeugs, bei dem
- für wenigstens ein Rad des Kraftfahrzeugs zwei unterschiedliche Antriebskraftwerte (F, T),
- sowie zugehörige Längsbeschleunigungswerte (aₓ) und
- zugehörige Radschlupfwerte (λ) ermittelt werden,
**dadurch gekennzeichnet, dass**
aus den ermittelten Antriebskraftwerten (F, T), den zugehörigen Längsbeschleunigungswerten (aₓ) und den zugehörigen Radschlupfwerten (λ) wenigstens zwei Koordinaten (h, Iᵣ, y) des Schwerpunkts ermittelt werden.

2. Verfahren nach Anspruch 1, bei dem die unterschiedlichen Antriebskraftwerte (F, T) zu unterschiedlichen Zeitpunkten ermittelt werden.

3. Verfahren nach Anspruch 2, bei dem die unterschiedlichen Antriebskraftwerte (F, T) zeitkontinuierlich ermittelt werden.

4. Verfahren nach einem der vorstehenden Ansprüche, bei dem die Koordinaten (h, Iᵣ, y) des Schwerpunkts mittels eines rekursiven Schätzalgorithmus ermittelt werden.

5. Verfahren nach Anspruch 4, bei dem die Koordinaten (h, Iᵣ, y) des Schwerpunkts mittels der Methode der kleinsten Quadrate (RLS) ermittelt werden.

6. Verfahren nach Anspruch 4, bei dem die Koordinaten (h, Iᵣ, y) des Schwerpunkts mittels eines Kalman-Filters ermittelt werden.

7. Verfahren nach Anspruch 6, bei dem die Koordinaten (h, Iᵣ, y) des Schwerpunkts mittels eines UKF ermittelt werden.

8. Verfahren nach einem der vorstehenden Ansprüche, bei dem die Koordinaten des Schwerpunkts einem Sicherheits- und/oder Regelalgorithmus des Kraftfahrzeugs zugeführt werden.

9. Vorrichtung zum Ermitteln eines Schwerpunktes eines Kraftfahrzeugs, die dazu ausgebildet ist, das Verfahren nach einem der vorstehenden Ansprüche abzuarbeiten.

## Claims

1. Method for determining the centre of gravity of a motor vehicle, in which
- two different drive force values (F, T) are determined for at least one wheel of the motor vehicle,
- and associated longitudinal acceleration values (aₓ) and
- associated wheel slip values (λ) are determined,
**characterized in that**
at least two coordinates (h, lᵣ, y) of the centre of gravity are determined from the determined drive force values (F, T), the associated longitudinal acceleration values (aₓ) and the associated wheel slip values (λ).

2. Method according to Claim 1, in which the different drive force values (F, T) are determined at different times.

3. Method according to Claim 2, in which the different drive force values (F, T) are determined continuously.

4. Method according to one of the preceding claims, in which the coordinates (h, lᵣ, y) of the centre of gravity are determined by means of a recursive estimation algorithm.

5. Method according to Claim 4, in which the coordinates (h, lᵣ, y) of the centre of gravity are determined by means of the least squares method (RLS).

6. Method according to Claim 4, in which the coordinates (h, lᵣ, y) of the centre of gravity are determined by means of a Kalman filter.

7. Method according to Claim 6, in which the coordinates (h, lᵣ, y) of the centre of gravity are determined by means of an unscented Kalman filter (UKF).

8. Method according to one of the preceding claims, in which the coordinates of the centre of gravity are fed to a safety and/or control algorithm of the motor vehicle.

9. Device for determining a centre of gravity of a motor vehicle which is designed to process the method according to one of the preceding claims.

## Revendications

1. Procédé de détermination du centre de masse d'un véhicule automobile, dans lequel :
pour au moins une roue du véhicule automobile, deux valeurs différentes (F, T) de la force d'entraînement,
des valeurs associées (aₓ) d'accélération longitudinale et
des valeurs associées (λ) de patinage des roues sont déterminées,
**caractérisé en ce que**
au moins deux coordonnées (h, lᵣ, y) du centre de masse sont déterminées à partir des valeurs (F, T) de la force d'entraînement, des valeurs (aₓ) associées d'accélération longitudinale et des valeurs associées (λ) de patinage des roues.

2. Procédé selon la revendication 1, dans lequel les différentes valeurs (F, T) de la force d'entraînement sont déterminées à des instants différents.

3. Procédé selon la revendication 2, dans lequel les différentes valeurs (F, T) de la force d'entraînement sont déterminées en continu.

4. Procédé selon l'une des revendications précédentes, dans lequel les coordonnées (h, lᵣ, y) du centre de masse sont déterminées au moyen d'un algorithme récursif d'estimation.

5. Procédé selon la revendication 4, dans lequel les coordonnées (h, lᵣ, y) du centre de masse sont déterminées au moyen de la méthode des moindres carrés (RLS).

6. Procédé selon la revendication 4, dans lequel les coordonnées (h, lᵣ, y) du centre de masse sont déterminées au moyen d'un filtre de Kalman.

7. Procédé selon la revendication 6, dans lequel les coordonnées (h, lᵣ, y) du centre de masse sont déterminées au moyen d'un UKF.

8. Procédé selon l'une des revendications précédentes, dans lequel les coordonnées du centre de masse sont apportées à un algorithme de sécurité et/ou de régulation du véhicule.

9. Dispositif de détermination du centre de masse d'un véhicule automobile, configuré pour exécuter le procédé selon l'une des revendications précédentes.
